# EUROPÄISCHE PATENTSCHRIFT

(11) **EP 3 317 948 B1**
(45) Veröffentlichungstag und Bekanntmachung des Hinweises auf die Patenterteilung: **15.04.2020**
(21) Anmeldenummer: 16727715.1
(22) Anmeldetag: 08.06.2016
(51) Int. Cl.: H02K 1/27, H02K 29/03, H02K 21/22

(54) **ELEKTRISCHE MASCHINE MIT REDUZIERTEM NUTRASTEN UND DREHMOMENTWELLIGKEIT**
ELECTRICAL MACHINE WITH REDUCED COGGING AND TORQUE RIPPLE
MACHINE ÉLECTRIQUE AVEC DENTURE ET ONDULATION DE COUPLE DE ROTATION RÉDUITS

(30) Priorität: 30.06.2015 DE 102015212165
(43) Veröffentlichungstag der Anmeldung: 09.05.2018
(73) Patentinhaber: Robert Bosch GmbH, 70442 Stuttgart (DE)
(72) Erfinder: RISTICEVIC, Milorad, 77815 Buehl (DE); EVANS, Steven Andrew, 77815 Buehl (DE); BUEHLER, Dirk, 77815 Buehl (DE)
(86) Internationale Anmeldenummer: PCT/EP2016/063041
(87) Internationale Veröffentlichungsnummer: WO 2017/001159

(56) Entgegenhaltungen:
- EP-A1- 1 492 213
- JP-A- 2002 125 336
- JP-A- 2006 042 527
- US-A- 5 030 868
- US-A1- 2006 055 266
- US-A1- 2008 157 619

## Beschreibung

Die vorliegende Erfindung betrifft eine elektrische Maschine, wie zum Beispiel einen Elektromotor oder einen Generator, umfassend einen Stator und einen Rotor mit mehreren Permanentmagneten.

### Stand der Technik

Derartige elektrische Maschinen kommen in verschiedenen technischen Anwendungen zum Einsatz. Unter anderem sind Elektromotoren bekannt, bei denen der Rotor mehrere aus einem permanentmagnetischen Material gebildete Magnetsegmente aufweist, welche an einem magnetischen Rückschlussring befestigt sind. Der Stator hingegen weist eine Anzahl von Erregerspulen auf, welche jeweils um einen Polkern gewickelt sind. Bei einer derartigen elektrischen Maschine kann eine bestimmte Welligkeit im erzeugten Drehmoment beobachtet werden. Diese sich als winkelabhängige Abweichung des Drehmoments des Motors bei konstantem Strom äußernde Drehmomentwelligkeit ergibt sich aus dem sogenannten Nutrasten des Motors und ist auf eine magnetische Interaktion der Statorpole mit den Rotorpolen zurückzuführen. Die sich periodisch dem Wellenmoment des Motors überlagernde Drehmomentwelligkeit kann sich je nach Einsatzgebiet der elektrischen Maschine jedoch negativ auf die Drehzahlregelung und den Arbeitsprozess auswirken. In einem solchen Fall ist eine Verringerung des Nutrastens und der Drehmomentwelligkeit in der elektrischen Maschine wünschenswert. Um dies zu erreichen, können die Endabschnitte der Magnetsegmente gezielt geformt werden. Beispielsweise können durch sinnvolle Abflachungen der Endabschnitte der Magnetsegmente sogenannte Polabhebungen erzeugt werden, welche einen günstigeren magnetischen Übergang zwischen den Magnetsegmenten ermöglicht. Bei einer Anordnung von acht Polen und acht Segmenten sind dementsprechend 16 Polabhebungen vorgesehen. Ist eine weitere Reduzierung der Drehmomentwelligkeit bzw. des Nutrastens notwendig, müssen weitere konstruktive Maßnahmen ergriffen werden.

Aus der EP 1 492 213 A1 ist ein Rotor für einen elektrischen Motor bekannt. Die JP 2006 042527 A offenbart ein Herstellungsverfahren für Motoren.

### Offenbarung der Erfindung

Es ist Aufgabe der Erfindung, die Drehmomentwelligkeit und das Nutrasten bei einer elektrischen Maschine zu reduzieren. Diese Aufgabe wird durch eine elektrische Maschine mit den Merkmalen gemäß Anspruch 1 gelöst. Weitere vorteilhafte Ausführungsformen sind in den abhängigen Ansprüchen angegeben.

Diese Aufgabe wird durch eine elektrische Maschine gemäß Anspruch 1 gelöst. Weitere vorteilhafte Ausführungsformen sind in den abhängigen Ansprüchen angegeben.

Gemäß der Erfindung ist eine elektrische Maschine umfassend einen Stator und einen vom Stator durch einen Luftspalt getrennten Rotor mit mehreren an einem magnetischen Rückschlusselement befestigten schalenförmigen Magnetsegmenten vorgesehen. Die Magnetsegmente sind dabei jeweils paarweise sich gegenüberliegend angeordnet und weisen in Umfangsrichtung jeweils mehrere magnetisch unterschiedlich polarisierte Abschnitte auf, welche jeweils einen magnetischen Pol des Rotors bilden. Dabei sind in den in Umfangsrichtung angeordneten Randzonen der Magnetsegmente jeweils als äußere Polabhebungen dienende Ausnehmungen vorgesehen, welche sich auf der dem Stator zugewandten Seite befinden. Ferner sind in den Übergangszonen zwischen den magnetisch unterschiedlich polarisierten Abschnitten der Magnetsegmente weitere Ausnehmungen auf der dem Stator zugewandten Seite vorgesehen, welche als innere Polabhebungen dienen. Durch das Vorsehen der inneren Polabhebungen kann das Nutrastmoment und damit verbunden die Drehmomentwelligkeit effektiv reduziert werden. Infolgedessen ergibt sich ein deutlich gleichmäßigerer Lauf der rotierenden elektrischen Maschine. Durch die Anordnung der Ausnehmungen auf der dem Luftspalt zugewandten Seite der Magnetsegmente wird eine besonders hohe Wirkung der inneren und äußeren Polabhebungen erzielt.

In einer erfindungsgemäßen optionalen Ausgestaltung ist vorgesehen, dass die Ausnehmungen in den Übergangszonen der Magnetsegmente jeweils ein aus zwei über ein Kreissegment miteinander verbundenen Tangenten gebildetes Querschnittsprofil aufweisen. Durch den tangentialen Verlauf wird eine besonders gleichmäßige Flussdichteverteilung in Umfangsrichtung erzielt.

In einer erfindungsgemäßen optionalen Ausgestaltung ist vorgesehen, dass die Ausnehmungen in den Übergangszonen der Magnetsegmente jeweils ein aus drei ineinander übergehenden Kreissegmenten gebildetes Querschnittsprofil aufweisen. Durch die ineinander übergehenden Kreissegmente wird ein besonders gleichmäßiger Flussdichteverlauf in Umfangsrichtung erreicht. Hierdurch können im Betrieb der elektrischen Maschine auftretende Rastmomentspitzen effektiv reduziert werden.

In einer erfindungsgemäßen optionalen Ausgestaltung ist vorgesehen, dass die Ausnehmungen in den Übergangszonen der Magnetsegmente jeweils ein aus vier jeweils über gerade Abschnitte miteinander verbundenen Kreissegmenten ausgebildetes Querschnittsprofil aufweisen. Die Kreissegmente ermöglichen einen gleichmäßigeren Flussdichteverlauf entlang der Umfangsrichtung, was sich im Betrieb in Form einer reduzierten Rastmomentwelligkeit bemerkbar macht. Die geraden Abschnitte zwischen den Kreissegmenten lassen sich dabei besonders einfach herstellen. Durch Ändern der Länge der geraden Abschnitte lassen sich Tiefe und Breite der inneren Polabhebungen relativ einfach variieren.

Die elektrische Maschine kann beinhalten, dass die Ausnehmungen in den Übergangszonen der Magnetsegmente jeweils ein kreissegmentförmiges Querschnittsprofil aufweisen. Das kreissegmentförmige Querschnittsprofil erlaubt dabei einen günstigen Übergang zwischen den magnetischen Polen eines Magnetsegments.

Die elektrische Maschine kann beinhalten, dass die Ausnehmungen in den Übergangszonen der Magnetsegmente jeweils ein dreieck-, rechteck- oder trapezförmiges Querschnittsprofil aufweisen. Auch derart geformte Profile ermöglichen einen günstigen Übergang zwischen den Polen eines Magnetsegments.

Die elektrische Maschine kann beinhalten, dass das dreieck-, rechteck- oder trapezförmige Querschnittsprofil der Ausnehmungen abgerundete Kanten aufweist. Durch die Abrundung der Kanten kann ein besonders sanfter Übergang zwischen den verschiedenen Abschnitten des jeweiligen Magnetsegments erreicht werden.

In einer weiteren Ausführungsform ist vorgesehen, dass die Ausnehmungen in den Übergangszonen der Magnetsegmente tiefer ausgebildet sind als die in den Randzonen der Magnetsegmente angeordneten Ausnehmungen. Hierdurch kann die Flussdichteverteilung in der Mitte einer inneren Polabhebung der durch die Lücke zwischen zwei Magnetsegmenten erzeugten Flussdichteverteilung angepasst werden.

In einer weiteren Ausführungsform ist vorgesehen, dass die Ausnehmungen in den Übergangszonen und den Randzonen der Magnetsegmente axial schräg verlaufen. Mithilfe dieser Maßnahme kann die Drehmomentwelligkeit der elektrischen Maschine sehr effektiv reduziert werden.

Eine elektrische Maschine kann beinhalten, dass die inneren Polübergänge im Wesentliche die gleichen magnetischen Eigenschaften aufweisen wie die jeweils eine Magnetlücke und die beiden im Bereich der jeweiligen Magnetlücke angeordneten äußeren Polabhebungen zweier benachbarter Magnetsegmente umfassenden äußeren Polübergänge. Da die Güte des Rastmoments wesentlich durch das Verhältnis der außenliegenden Polabhebungen zu den innenliegenden Polabhebungen bestimmt wird, können durch eine Angleichung der inneren und äußeren Polübergänge zusätzliche Ordnungen des Rastmoments verhindert werden.

Im Folgenden wird die Erfindung anhand von Figuren näher dargestellt. Dabei zeigen:
Figur 1 eine schematische Querschnittsdarstellung einer herkömmlichen elektrischen Maschine mit acht Magnetsegmenten und 16 äußeren Polabhebungen;
Figur 2 schematisch eine Querschnittsdarstellung durch eine elektrische Außenläufermaschine mit vier Magnetsegmenten umfassend jeweils zwei Rotorpole;
Figur 3 eine schematische Querschnittsdarstellung durch eine elektrische Außenläufermaschine mit vier Magnetsegmenten und acht Rotorpolen sowie jeweils einer inneren Polabhebung im Übergangsbereich zwischen zwei Rotorpolen eines Magnetsegments;
Figur 4 schematisch eine Querschnittsdarstellung durch eine weitere elektrische Außenläufermaschine mit vier Magnetsegmenten und acht Rotorpolen;
Figur 5 eine Detailaufnahme der elektrischen Außenläufermaschine aus Figur 4;
Figur 6 eine schematische Darstellung des Querschnittsprofils eines Magnetsegments mit einer inneren Polabhebung in Form eines Kreissegments;
Figur 7 schematisch eine Darstellung des Querschnittsprofils eines alternativen Magnetsegments mit einer dreieckförmigen Polabhebung;
Figur 8 schematisch eine Detaildarstellung einer inneren Polabhebung mit einem dreieckförmigen Querschnittsprofil und wahlweise abgerundeten Kanten;
Figur 9 schematisch eine Detaildarstellung einer inneren Polabhebung mit einem trapezförmigen Querschnittsprofil und wahlweise abgerundeten Kanten;
Figur 10 schematisch eine Detaildarstellung einer inneren Polabhebung mit einem durch drei ineinander übergehende Kreissegmente gebildeten Querschnittsprofil;
Figur 11 schematisch eine Detaildarstellung einer inneren Polabhebung mit einem rechteckförmigen Querschnittsprofil und wahlweise abgerundeten Kanten;
Figur 12 schematisch eine Detaildarstellung einer inneren Polabhebung mit einem Querschnittsprofil in Form zweier über ein Kreissegment miteinander verbundener Tangenten;
Figur 13 schematisch eine Querschnittsdarstellung von vier Magnetsegmenten zur Verdeutlichung des Verhältnisses zwischen den äußeren und den inneren Polabhebungen;
Figur 14 beispielhaft ein Diagramm zur Verdeutlichung der Winkelabhängigkeit des Drehmoments für Magnetsegmente mit und ohne innerer Polabhebung.

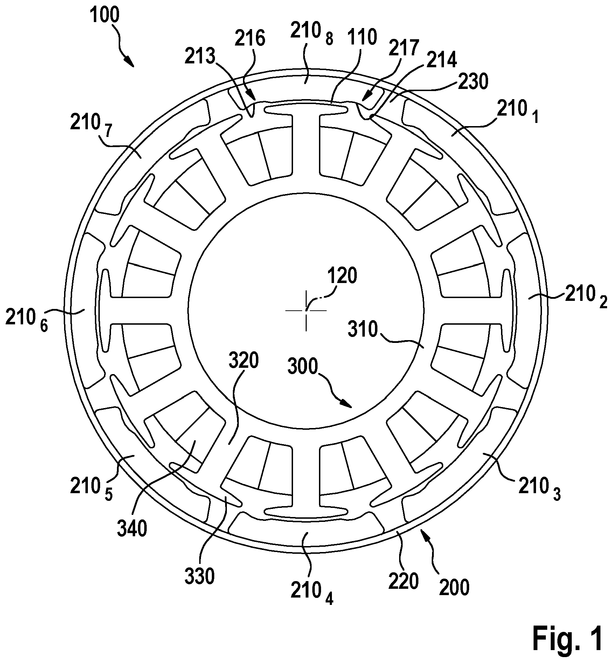

Die Figur 1 zeigt einen Längsquerschnitt durch einen bekannten elektrischen Motor. Der als Außenläufermotor ausgebildete Elektromotor weist einen inneren Stator 300 und einen den Stator 300 umgebenden und von diesem durch einen Luftspalt 110 getrennten Rotor 200 auf. Der Stator 300 umfasst insgesamt 12 Polkerne 320, welche über einen inneren Magnetschlussring 310 miteinander verbunden sind. Aus Gründen der Übersichtlichkeit ist lediglich ein Statorkern mit einem Bezugszeichen versehen. Die Polkerne 320 sind jeweils mit einer elektrischen Spule 340 umwickelt, welche sich jeweils in den zwischen zwei benachbarten Polkernen 320 ausgebildeten Nuten befindet. Ferner umfasst jeder Polkern 320 jeweils einen Polschuh 330, dessen Außenfläche ein Profil in Form eines Kreissegments aufweist.

Der gegenüber dem Stator 300 um eine Rotationsachse 120 drehbar gelagerte Rotor 200 umfasst insgesamt acht Magnetsegmente 210₁ bis 210₈, welche an der Innenseite eines zylindrischen Rückschlussrings 220 befestigt sind. Die äußeren und inneren Mantelflächen der schalenförmig ausgebildeten Magnetsegmente 210₁ bis 210₈ weisen vorzugsweise kreissegmentförmige Profile auf. Die als Permanentmagnete ausgebildeten Magnetsegmente 210₁ bis 210₈, weisen jeweils zwei Abschnitte 211, 212 mit magnetisch unterschiedlicher Polarisierung auf, welche jeweils als ein magnetischer Pol des Rotors dienen. Zwei unmittelbar benachbarte Magnetsegmente 210₁ bis 210₈ sind jeweils mittels einer Magnetlücke 230 voneinander getrennt, welche jeweils einen äußeren Polübergang zwischen verschieden magnetisierten Rotorpolen bildet. Zur Verbesserung der Drehmomentwelligkeit und zur Verringerung des Nutrastens sind bereits äußere Polabhebungen an den einzelnen Magnetsegmenten bekannt. Die Polabhebung ist dabei ein sinnvolles Verfahren zum Verringern des Nutrastens und der Drehmomentwelligkeit in elektrischen Maschinen. Der Effekt wird durch eine gezielte Formung der Bauteile des Elektromotors erreicht, wobei die Randbereiche der Magnetsegmente speziell geformt werden. Im vorliegenden Fall sind die Polabhebungen 213, 214 jeweils in den Randbereichen 216, 217 eines Magnetsegments 210₁ bis 210₈ in Form von Ausnehmungen ausgebildet. Die Ausnehmungen 213, 214 befinden sich dabei auf der dem Stator 300 zugewandten Seite der Magnetsegmente 210₁ bis 210₈. Bei einer Anordnung von acht Polen und acht Magnetsegmenten sind dementsprechend 16 Polabhebungen vorgesehen.

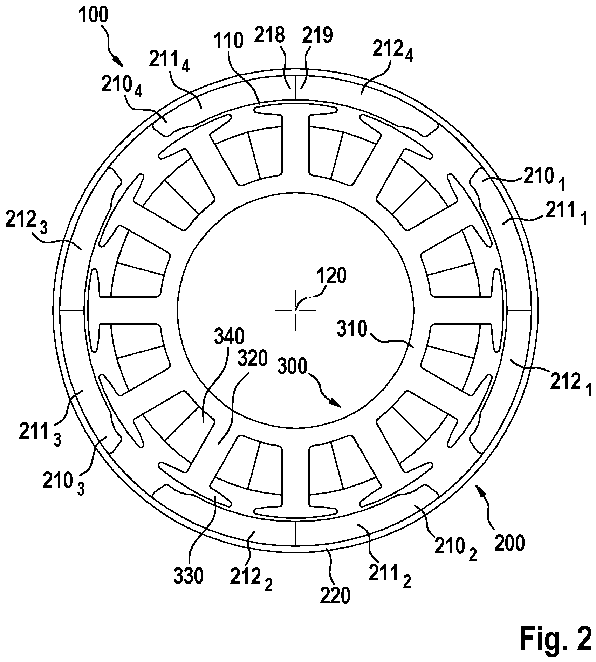

Zur Erleichterung der Montage lassen sich die acht Rotorpole des in der Figur 1 beispielhaft gezeigten elektrischen Motors auch weniger Magnetsegmenten realisieren. Hierzu werden Magnetsegmente mit magnetisch unterschiedlich polarisierten Abschnitten verwendet. Die Figur 2 zeigt hierzu beispielhaft eine elektrische Maschine 100 mit lediglich vier Magnetsegmenten 210₁ bis 210₄ und acht Rotorpolen 211₁, 212₁ bis 211₄, 212₄. Dabei stellt der Übergangsbereich zwischen den beiden Rotorpolen 211ᵢ, 212ᵢ eines Magnetsegments 210ᵢ jeweils einen inneren Polübergang 219 dar.

Wie in der Figur 2 gezeigt ist, werden beim herkömmlichen Ansatz lediglich die in den Randbereichen der Magnetsegmente angeordneten Polübergänge optimiert. Hierdurch ergeben sich insgesamt nur acht Polabhebungen, wobei jedem Rotorpol lediglich eine Polabhebung zugeordnet ist. Infolge dessen ergibt sich im Übergangsbereich 218 jedes Magnetsegments 210 jeweils ein abrupter magnetischer Übergang, das sich nachteilig auf die Drehmomentwelligkeit bzw. auf das Nutrastmoment auswirkt.

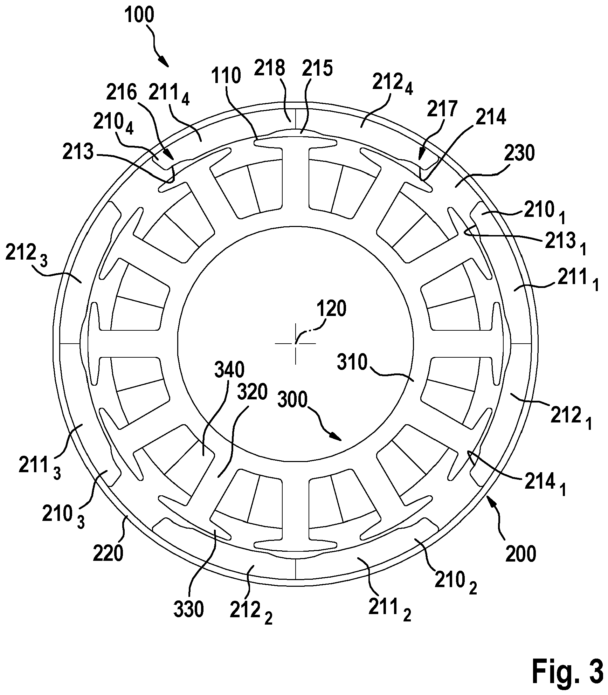

Um die Drehmomentwelligkeit bzw. das Nutrastmoment des Elektromotors zu reduzieren, wir vorgeschlagen, zusätzliche Polabhebungen in den Übergangsbereichen 218 der einzelnen Magnetsegmente 210ᵢ vorzusehen. Hierdurch wird erreicht, dass jeder der Rotorpole 211ᵢ, 212ᵢ jeweils beidseitig Polabhebungen aufweist. Die Figur 3 zeigt hierzu beispielhaft einen entsprechend ausgebildeten Elektromotor 100 mit vier schalenförmigen Magnetsegmenten 210₁ bis 210₄, welche jeweils zwei Rotorpole 211₁, 212₁ bis 211₄, 212₄ und eine in dem entsprechenden Übergangsbereich 218 angeordnete Ausnehmung 215 aufweisen. Die auf der zum Stator 300 gerichteten Seite des jeweiligen Magnetsegments angeordnete Ausnehmung 215 dient den beiden Rotprpolen 211ᵢ, 212ᵢ des jeweiligen Magnetsegments 210ᵢ jeweils als eine innere Polabhebung. Um maximal wirken zu können, muss die Polabhebung, wie im vorliegenden Ausführungsbeispiel der Fall, zum Luftspalt orientiert sein bzw. sich möglichst nah am Luftspalt befinden.

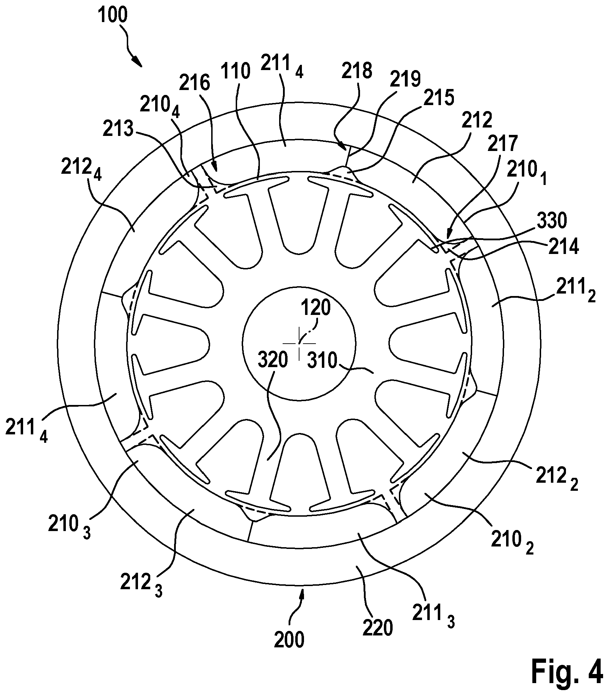

Die Figur 4 zeigt ein weiteres Beispiel für einen Elektromotor 100 mit vier Magnetsegmenten 210₁, 201₂, 201₃, 210₄, welche jeweils äußere und innere Polabhebungen 215, 213, 214 aufweisen. Dabei ist ersichtlich, dass die Magnetlücken 230 zwischen den Magnetsegmenten 210ᵢ im Vergleich zu der Elektrischen Maschine aus der Figur 2 eine deutlich geringere Breite aufweisen. Ferner sind die inneren Polabhebungen 215 tiefer ausgebildet, so dass sich für das magnetische Feld in den Bereichen der inneren Polübergänge und in den Bereichen der äußeren Polübergänge eine möglichst gleiche Abschwächung ergibt.

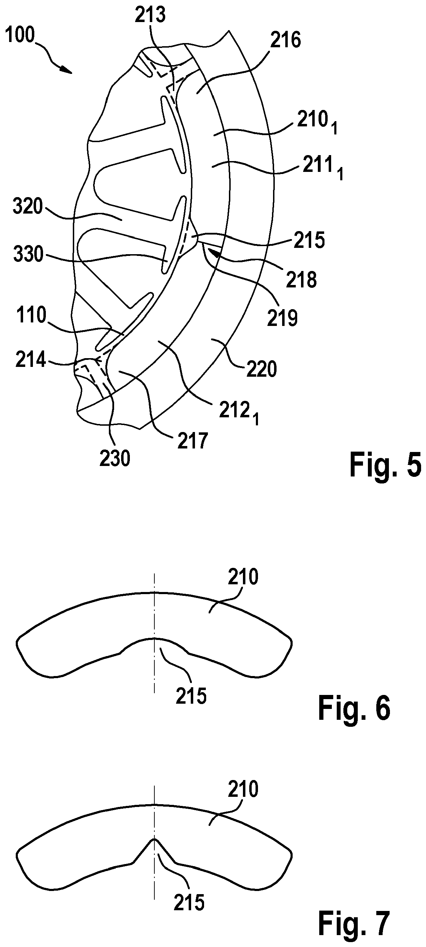

Die Figur 5 zeigt eine Detaildarstellung eines Magnetsegments 210₁ der elektrischen Maschine 100 aus der Figur 4. Wie hier ersichtlich ist, weisen die Ausnehmungen 213, 214, 215 jeweils abgerundete Kanten auf.

Wie in den Figuren 4 und 5 mittels gestrichelten Linien angedeutet ist, können die Magnetsegmente 210ᵢ aus jeweils einem Segment eines ringförmigen Elements gebildet werden, welches eine gleichmäßige Wandstärke aufweist. Hierzu können die als Polabhebungen 213, 214, 215 dienenden Ausnehmungen durch nachträgliche Bearbeitung der Ringsegmente erzeugt werden. Das kann beispielsweise durch Fräsen der Ringsegmente oder durch ein anderes geeignetes subtraktives Verfahren erfolgen.

Die magnetischen Eigenschaften einer Polabhebung hängen wesentlich von dem Querschnittsprofil der die jeweilige Polabhebung bildenden Ausnehmung ab. Somit hat die Geometrie dieses Querschnittsprofils unmittelbar auch Einfluss auf den Beitrag der jeweiligen Polabhebung zu der Drehmomentwelligkeit bzw. des Nutrastmoments des Elektromotors. Um Drehmomentspitzen zu reduzieren, ist ein relativ sanfter magnetischer Übergang zwischen den Magnetpolen sinnvoll.

Für einen glatteren Drehmomentverlauf ist es ferner vom Vorteil, wenn ein Polübergang im Bereich der inneren Polabhebungen im Wesentlichen die gleichen magnetischen Eigenschaften aufweist wie ein Polübergang im Bereich der äußeren Polabhebungen.

Grundsätzlich ist es möglich, das Profil der inneren Polabhebungen 215 der jeweiligen Anwendung anzupassen. So können beispielsweise relativ einfach geformte Polabhebungen erzeugt werden, deren Herstellung keinen besonderen Aufwand erfordert und daher relativ kostengünstig erfolgen kann. Ferner ist es möglich, Polabhebungen mit einem oder mehreren Radien zu erzeugen, deren Herstellung zwar aufwändiger ist, die sich jedoch besonders günstig auf die Drehmomentwelligkeit auswirken können.

In den folgenden Figuren 6 bis 16 werden beispielhaft Polabhebungen mit verschiedenen Profilen dargestellt. So zeigt die Figur 6 schematisch ein Querschnittsprofil durch ein Magnetsegment mit einer inneren Polabhebung 215, welche durch eine kreissegmentförmige Ausnehmung erzeugt ist. Diese Polabhebung 215 lässt sich besonders einfach herstellen.

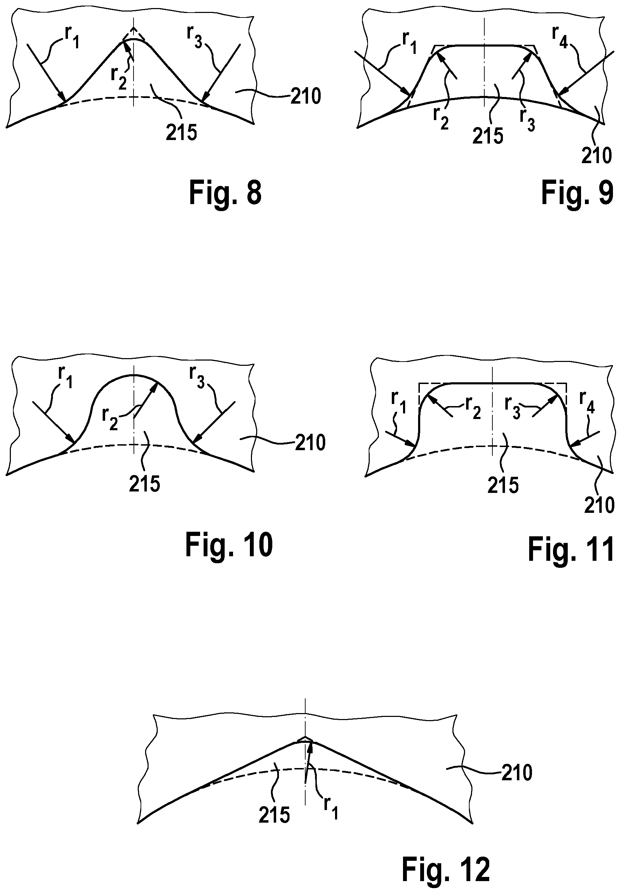

Die Figur 7 zeigt schematisch das Querschnittsprofil eines weiteren Magnetsegments 210 mit einer durch eine dreieckförmige Ausnehmung gebildeten Polabhebung 215. Das dreieckförmige Profil lässt sich ebenfalls relativ einfach herstellen. Die Dreiecksform weist jedoch drei scharfe Kanten auf, welche einen relativ scharfen magnetischen Übergang bewirken. Um den magnetischen Übergang im Bereich der inneren Polabhebung zu verbessern, können die Kanten abgerundet werden. Hierzu zeigt die Figur 8 beispielhaft eine innere Polabhebung 215 mit einem dreieckigen Profil und abgerundeten Kanten. Wie aus der hier gezeigten Detaildarstellung ersichtlich ist, kann das Profil aus drei über gerade Abschnitte miteinander verbunden Kreissegmenten mit den Radien r₁, r₂, r₃ gebildet sein.

Die Figur 9 zeigt schematisch das Querschnittsprofil einer weiteren inneren Polabhebung 215 mit einem trapezförmigen Profil. Zur Homogenisierung des magnetischen Feldes im Bereich der Polabhebung 215 können die Kanten der trapezförmigen Ausnehmung abgerundet sein. Eine solche trapezförmige Polabhebung mit abgerundeten Kanten ist hier mittels der durchgehenden Linie dargestellt. Bei dieser modifizierten Polabhebung 215 lässt sich das Profil mittels vier über gerade Abschnitte miteinander verbundenen Kreissegmenten mit den Radien r₁, r₂, r₃, r₄ beschreiben.

Die Figur 10 zeigt schematisch das Querschnittsprofil einer weiteren inneren Polabhebung 215. Das Querschnittsprofil ist dabei in Form von drei ineinander übergehenden Kreissegmenten ausgebildet ist, wobei die Kreissegmente gleiche oder unterschiedliche Radien r₁, r₂, r₃ aufweisen können.

Die Figur 11 zeigt schematisch das Querschnittsprofil einer weiteren inneren Polabhebung 215. Das Querschnittsprofil ist dabei rechteckförmig ausgebildet und kann, wie in Figur 11 mittels einer durchgehenden Linie dargestellt ist, abgerundete Kanten aufweisen. Ein solches Querschnittsprofil lässt sich im Wesentlichen mittels vier jeweils über gerade Abschnitte miteinander verbunden Kreissegmenten beschreiben.

Grundsätzlich lässt sich die Geometrie der hier gezeigten Querschnittsprofile durch eine Variation der Radien der jeweiligen Kreissegmente sowie der Länge der die einzelnen Kreissegmente miteinander verbindenden geraden Abschnitte beliebig gestalten. Insbesondere kann durch eine Vergrößerung der Tiefe und der Breite der entsprechenden Polabhebung das magnetische Feld in diesem Bereich reduzieren.

Anstatt der hier beispielhaft gezeigten geometrischen Formen, wie z.B. Kreissegment, Dreieck, Rechteck oder Trapez, kann ein besonders günstiger Verlauf des magnetischen Feldes im Bereich der mittleren Polabhebung durch Verwendung von Tangenten erzielt werden. Hierzu zeigt die Figur 12 beispielhaft das Querschnittsprofil einer aus zwei Tangenten gebildeten mittleren Polabhebung 215, wobei die beiden Tangenten über ein Kreissegment mit dem Radius R₁ miteinander verbunden sind. Durch den tangentialen Verlauf der Polabhebung 215 kommt es in diesem Bereich zu einer besonders sanften Änderung der magnetischen Feldstärke, was sich günstig auf die Drehmomentwelligkeit auswirkt.

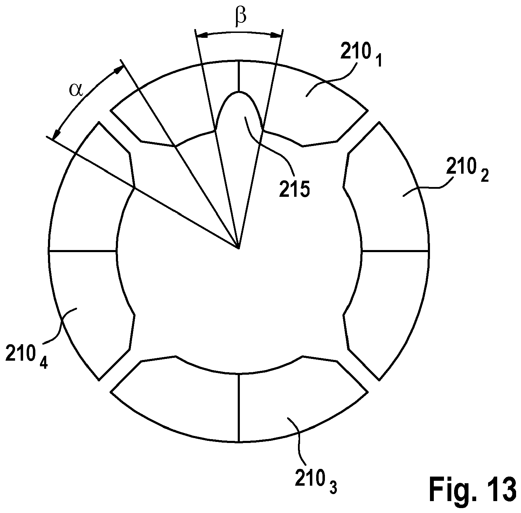

Die Figur 13 zeigt das Verhältnis von einem zwischen zwei benachbarten Magnetsegmenten gebildeten äußeren Polübergang α zu einem in der Mitte des Magnetsegments angeordneten inneren Polübergang β. Dabei ist besonders günstig, wenn ein innerer Polübergang β aus Sicht eines Statorpols im Wesentlichen die gleichen magnetischen Eigenschaften aufweist wie ein Polübergang a zwischen zwei benachbarten Magnetsegmenten.

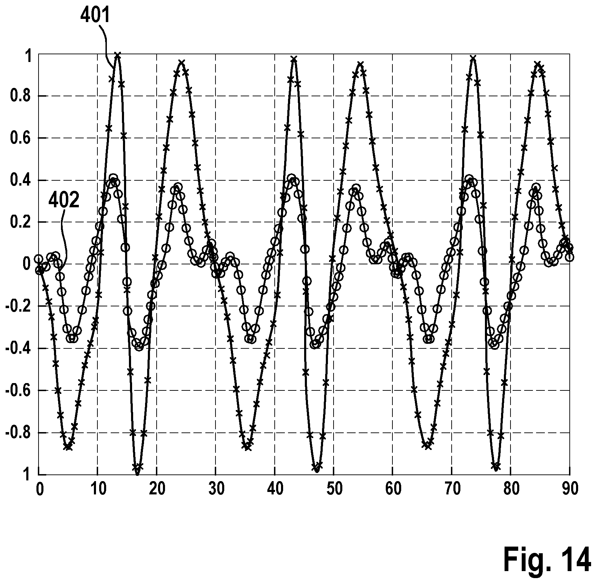

Durch die Einführung einer inneren Polabhebung kann die Drehmomentwelligkeit und das damit verbundene Rastmoment deutlich verringert werden. Figur 14 zeigt beispielhaft ein Diagramm mit dem Verlauf der Drehmomentwelligkeit eines elektrischen Motors mit und ohne innere Polabhebungen. Dabei ist das am Rotor wirkende Drehmoment gegen den Drehwinkel des Rotors aufgetragen. Hierbei zeigt die erste Kurve 401 den Drehmomentverlauf eines herkömmlichen Elektromotors mit Magnetsegmenten, welche lediglich äußere Polabhebungen aufweisen. Hingegen zeigt die Kurve 402 den Drehmomentverlauf eines Elektromotors, bei dem die Magnetsegmente zusätzlich innere Polabhebungen aufweisen. Hierbei wird ersichtlich, dass durch die Einführung der inneren Polabhebungen die Amplituden der Drehmomentschwankungen deutlich reduziert werden. Hierdurch lässt sich folglich die Drehmomentwelligkeit und das damit verbundene Nutrastmoment effektiv reduzieren.

In den hier gezeigten Figuren wurden innere Polabhebungen stets im Zusammenhang mit Magnetsegmenten gezeigt, welche lediglich zwei Magnetpole aufweisen. Es ist jedoch grundsätzlich möglich, das hier beschriebene Konzept auch auf innere Polabhebungen von Magnetsegmenten mit mehr als zwei Magnetpolen anzuwenden.

Obwohl die Erfindung vorgehend anhand von konkreten Ausführungsbeispielen beschrieben worden ist, ist sie keineswegs darauf beschränkt. Der Fachmann wird somit die beschriebenen Merkmale geeignet abändern und miteinander kombinieren können, ohne vom Kern der Erfindung abzuweichen.

## Patentansprüche

1. Elektrische Maschine (100) umfassend einen Stator (300) und einen vom Stator (300) durch einen Luftspalt (110) getrennten Rotor (200) mit mehreren an einem magnetischen Rückschlusselement (220) befestigten Magnetsegmenten (210₁, 210₂, 210₃, 210₄),
wobei die Magnetsegmente (210₁, 210₂, 210₃, 210₄) sich jeweils paarweise gegenüber liegend angeordnet sind, und wobei die Magnetsegmente (210₁, 210₂, 210₃, 210₄) in Umfangsrichtung jeweils mehrere magnetisch unterschiedlich polarisierte Abschnitte (2111, 212₁, 211₂, 212₂ 211₃, 212₃, 211₄, 212₄) aufweisen, welche jeweils einen magnetischen Pol des Rotors (200) bilden,
wobei in den in Umfangsrichtung angeordneten Randzonen (216, 217) der Magnetsemente (210₁, 210₂, 210₃, 210₄) jeweils als äußere Polabhebungen dienende Ausnehmungen (213, 214) auf der dem Stator (300) zugewandten Seite vorgesehen sind, und
wobei in den Übergangszonen (218) zwischen den magnetisch unterschiedlich polarisierten Abschnitten (211₁, 212₁, 211₂, 212₂ 211₃, 212₃, 211₄, 212₄) der Magnetsegmente (210₁, 210₂, 210₃, 210₄) ferner weitere Ausnehmungen (215) auf der dem Stator (300) zugewandten Seite vorgesehen sind, welche als innere Polabhebungen dienen, wobei zwei unmittelbar benachbarte Magnetsegmente (210₁, 210₂, 210₃, 210₄) jeweils mittels einer Magnetlücke (230) voneinander getrennt sind, **dadurch**
**gekennzeichnet, dass**
die Magnetsegmente (210₁, 210₂, 210₃, 210₄) schalenförmig ausgebildet sind, und dass wenigstens eine der Ausnehmungen (215) in den Übergangszonen (218) der Magnetsegmente (210₁, 210₂, 210₃, 210₄) jeweils
• ein aus drei ineinander übergehenden Kreissegmenten gebildetes Querschnittsprofil aufweist, oder
• ein aus zwei über ein Kreissegment miteinander verbundenen Tangenten gebildetes Querschnittsprofil aufweist, oder
• ein aus vier jeweils über gerade Abschnitte miteinander verbundenen Kreissegmenten ausgebildetes Querschnittsprofil aufweist.

2. Elektrische Maschine (100) nach dem vorhergehenden Anspruch, wobei die Ausnehmungen (215) in den Übergangszonen (218) der Magnetsegmente (210₁, 210₂, 210₃, 210₄) tiefer ausgebildet sind als die in den Randzonen (216, 217) der Magnetsegmente (210₁, 210₂, 210₃, 210₄) angeordnete Ausnehmungen (213, 214).

3. Elektrische Maschine (100) nach einem der vorhergehenden Ansprüche, wobei die Ausnehmungen (215) in den Übergangszonen (218) und den Randzonen (216, 217) der Magnetsegmente (210₁, 210₂, 210₃, 210₄) axial schräg verlaufen.

## Claims

1. Electrical machine (100) comprising a stator (300) and a rotor (200) which is separated from the stator (300) by an air gap (110) and has a plurality of magnet segments (210₁, 210₂, 210₃, 210₄), which are fastened to a magnetic return path element (220),
wherein the magnet segments (210₁, 210₂, 210₃, 210₄) are arranged opposite one another in pairs in each case, and wherein the magnet segments (210₁, 210₂, 210₃, 210₄) each have a plurality of differently magnetically polarized sections (211₁, 212₁, 211₂, 212₂, 211₃, 212₃, 211₄, 212₄) in the circumferential direction, each forming a magnetic pole of the rotor (200),
wherein recesses (213, 214) which each serve as outer detached pole portions are provided on that side which faces the stator (300) in the edge zones (216, 217) of the magnet segments (210₁, 210₂, 210₃, 210₄) which are arranged in the circumferential direction, and
wherein further recesses (215) are additionally provided on that side which faces the stator (300) in the transition zones (218) between the differently magnetically polarized sections (211₁, 212₁, 211₂, 212₂, 211₃, 212₃, 211₄, 212₄) of the magnet segments (210₁, 210₂, 210₃, 210₄), said recesses serving as inner detached pole portions, wherein two directly adjoining magnet segments (210₁, 210₂, 210₃, 210₄) are respectively mutually separated by a magnet gap (230), **characterized in that** the magnet segments (210₁, 210₂, 210₃, 210₄) are of shell-like configuration, and **in that** at least one of the recesses (215) in the transition zones (218) of the magnet segments (210₁, 210₂, 210₃, 210₄) each has
• a cross-sectional profile comprised of three interconnecting segments of a circle, or
• has a cross-sectional profile comprised of two tangents, which are interconnected by a segment of a circle, or
• has a cross-sectional profile comprised of four segments of a circle, which are respectively interconnected by straight sections.

2. Electrical machine (100) according to the preceding claim,
wherein the recesses (215) in the transition zones (218) of the magnet segments (210₁, 210₂, 210₃, 210₄) are configured with a greater depth than the recesses (213, 214) in the edge zones (216, 217) of the magnet segments (210i, 210₂, 210₃, 210₄).

3. Electrical machine (100) according to either of the preceding claims,
wherein the recesses (215) in the transition zones (218) and the edge zones (216, 217) of the magnet segments (210₁, 210₂, 210₃, 210₄) have an oblique axial arrangement.

## Revendications

1. Machine électrique (100), comprenant un stator (300) et un rotor (200), séparé du stator (300) par un entrefer (110) et pourvu d'une pluralité de segments magnétiques (210₁, 210₂, 210₃, 210₄) fixés à un élément de reflux magnétique (220),
les segments magnétiques (210₁, 210₂, 210₃, 210₄) étant respectivement disposés face à face par paires et les segments magnétiques (210₁, 210₂, 210₃, 210₄) possédant respectivement dans la direction périphérique plusieurs portions (211₁, 212₁, 211₂, 212₂, 211₃, 212₃, 211₄, 212₄) aux polarités magnétiques différentes, lesquelles forment respectivement un pôle magnétique du rotor (200), des cavités (213, 214) servant respectivement de dégagements polaires extérieurs se trouvant dans les zones de bordure (216, 217) des segments magnétiques (210₁, 210₂, 210₃, 210₄) disposées dans la direction périphérique sur le côté qui fait face au stator (300), des cavités (215) supplémentaires se trouvant sur le côté qui fait face au stator (300) dans les zones de transition (218) entre les portions (211₁, 212₁, 211₂, 212₂, 211₃, 212₃, 211₄, 212₄) aux polarités magnétiques différentes des segments magnétiques (210₁, 210₂, 210₃, 210₄), lesquelles servent de dégagements polaires intérieurs, deux segments magnétiques (210₁, 210₂, 210₃, 210₄) directement voisins étant respectivement séparés l'un de l'autre au moyen d'une brèche magnétique (230),
**caractérisée en ce que**
les segments magnétiques (210₁, 210₂, 210₃, 210₄) sont réalisés en forme de coque,
et **en ce qu'**au moins l'une des cavités (215) dans les zones de transition (218) des segments magnétiques (210₁, 210₂, 210₃, 210₄) possède respectivement
* un profil de section transversale formé de trois segments de cercle se confondant les uns dans les autres, ou
* un profil de section transversale formé de deux tangentes reliées l'une à l'autre par un segment de cercle, ou
* un profil de section transversale formé de quatre segments de cercle reliés les uns aux autres respectivement par des portions droites.

2. Machine électrique (100) selon la revendication précédente, les cavités (215) dans les zones de transition (218) des segments magnétiques (210₁, 210₂, 210₃, 210₄) étant configurées plus profondes que les cavités (213, 214) disposées dans les zones de bordure (216, 217) des segments magnétiques (210₁, 210₂, 210₃, 210₄) .

3. Machine électrique (100) selon l'une des revendications précédentes, les cavités (215) dans les zones de transition (218) et les zones de bordure (216, 217) des segments magnétiques (210₁, 210₂, 210₃, 210₄) suivant un tracé oblique.
